# EUROPÄISCHE PATENTANMELDUNG

(11) **EP 2 664 409 A1**
(43) Veröffentlichungstag der Anmeldung: **20.11.2013**
(21) Anmeldenummer: 12168265.2
(22) Anmeldetag: 16.05.2012
(51) Int. Cl.: B23K 26/34, B23K 26/06, C30B 13/24

(54) **Angepasste Leistung beim Laserauftragsschweißen**

(71) Anmelder: Siemens Aktiengesellschaft, 80333 München (DE); Fraunhofer-Gesellschaft zur Förderung der angewandten Forschung e.V., 80686 München (DE)
(72) Erfinder: Arjakine, Nikolai, 10555 Berlin (DE); Burbaum, Bernd, 14612 Falkensee (DE); Gasser, Andres, 52066 Aachen (DE); Linnenbrink, Stefanie, 52372 Kreuzau (DE); Melzer-Jokisch, Torsten, 15366 Neuenhagen bei Berlin (DE); Mentzel, Frank, 52066 Aachen (DE); Ott, Michael, 45470 Mülheim an der Ruhr (DE); Piegert, Sebastian, 10777 Berlin (DE); Pirch, Norbert, 52074 Aachen (DE)

(57) **Zusammenfassung**

Durch eine verminderte Leistung in der ersten aufgetragenen Schweißlage (7') können Bauteile rissfrei geschweißt werden, wobei die anderen Parameter vorzugsweise unverändert gelassen werden.

## Beschreibung

Die Erfindung betrifft ein Auftragsschweißen, bei dem die Schweißleistung in Abhängigkeit vom Fortschritt des Verfahrens angepasst wird.

Auftragsschweißen wie Laserschweißverfahren sind Stand der Technik und werden auch bei nickelbasierten Legierungen, die bei Komponenten für Gasturbinen eingesetzt werden, benutzt.

Ebenso sind bekannt gerichtet erstarrte Werkstoffe mit einer kolumnaren oder einkristallinen Struktur.

Oft entstehen jedoch noch feine Risse beim Auftragsschweißen.

Es ist daher Aufgabe der Erfindung dieses Problem zu lösen.

Die Aufgabe wird gelöst durch ein Auftragsschweißen gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:

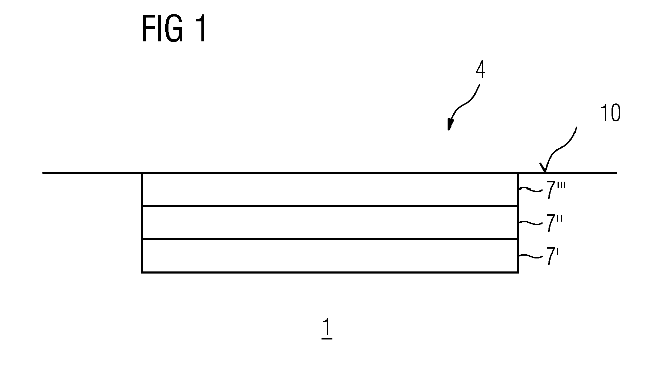

Figur 1 eine Schweißstelle,
Figur 2 eine Liste von Superlegierungen.

Die Beschreibung und die Figuren stellen nur Ausführungsbeispiele der Erfindung dar.

Beim Auftragsschweißen eines Substrats 1 wird eine Schweißstelle 4 durch Auftrag von Material, insbesondere Pulver in mehreren Schweißlagen 7', 7", 7"' erzeugt.

Beim Stand der Technik wird immer die gleiche Leistung für alle Schweißlagen 7', 7", ... verwendet.

Erfindungsgemäß wird jedoch beim Auftragsschweißen nur für die erste Schweißlagen 7' eine verminderte erste Schweißleistung P1 wendet, die zwischen 60% - 90% der Schweißleistung P2 für die zweiten und/oder weiteren Schweißlagen 7", 7"', ... beträgt.
Vorzugsweise beträgt P1= 70% - 80% P2.

Die zweite oder die weiteren Schweißlage 7", 7"' wird/werden mit der erhöhten Schweißleistung P2 (100%) erzeugt.

Die weiteren Parameter wie Massenflussrate des Schweißmaterials, beispielsweise die Pulverzufuhrrate beim Pulverauftragsschweißen oder relative Geschwindigkeit zwischen Substrat 1 oder Schweißkopf usw. bleiben vorzugsweise konstant und entsprechen der für die erste Schweißlage 7'.

So setzen sich keine Korngrenzenrisse aus dem Substrat 1 fort in dem geschweißten Bereich 4 oder durch den Wärmeeintrag sich bildende Risse können sich erst gar nicht ausbreiten.

So wird eine definierte Grenzschicht erzeugt, was insbesondere bei gerichtet erstarrten Werkstoffen sinnvoll ist, da hier die Korngrenzen sehr gerichtet verlaufen.

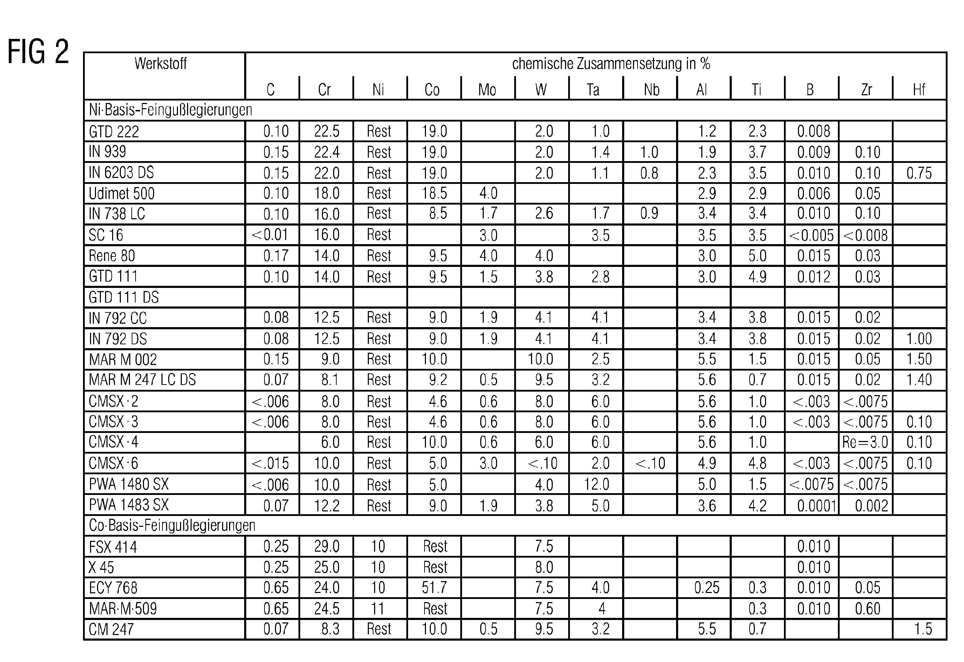

Besonders bevorzugt wird dies beim Laserschweißverfahren angewendet und bei gerichtet erstarrten Werkstoffen (Figur 2), bei dem für das Laserschweißen wiederum auf die Vorzugsrichtung des Substrats 1 geachtet wird.

## Patentansprüche

1. Auftragsschweißverfahren,
insbesondere Laserauftragsschweißverfahren,
bei dem eine Schweißstelle (4) in mehreren Lagen (7', 7", 7"', ...) erzeugt wird, und
wobei für die erste Schweißlage (7') die erste Schweißleistung (P1) bei 60% bis 90% der weiteren Schweißleistung (P2) für die Erzeugung der zweiten (7") und/oder der weiteren Schweißlagen (7"', ...) liegt.

2. Verfahren nach Anspruch 1,
bei dem die erste Schweißleistung (P1) 70% bis 80% der weiteren Schweißleistung (P2) beträgt.

3. Verfahren einem oder beiden der Ansprüche 1 oder 2,
bei dem das Schweißverfahren ein Laserschweißverfahren darstellt.

4. Verfahren nach einem oder mehreren der vorherigen Ansprüche,
bei dem die Massenflussrate des zugeführten Schweißmaterials und/oder die relative Geschwindigkeit zwischen Substrat (1) und Schweißkopf und/oder weiterer Verfahrensparameter für die erste (7') und die weiteren Schweißlagen (7", 7"', ...) unverändert sind,
insbesondere alle unverändert bleiben.

5. Verfahren nach einem oder mehreren der vorherigen Ansprüche,
bei dem mindestens drei Schweißlagen (7', 7", 7"'), insbesondere mindestens 5 Schweißlagen (7', 7", 7"', ...) generiert werden.

6. Verfahren nach einem oder mehreren der Ansprüche 1 bis 5,
**dadurch gekennzeichnet, dass**
es für gerichtet erstarrte Werkstoffe,
insbesondere für nickelbasierte Werkstoffe verwendet wird.
